# DEMANDE DE BREVET EUROPEEN

(11) **EP 0 815 932 A1**
(43) Date de publication de la demande: **07.01.1998**
(21) Numéro de dépôt: 97401534.9
(22) Date de dépôt: 01.07.1997
(51) Int. Cl.: B01J 4/00, B01J 8/02, B01J 8/04

(54) **Bouteille de traitement de gaz**

(30) Priorité: 02.07.1996 FR 9608231
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Andreani, Philippe, 94270 Le Kremlin Bicetre (FR); Monereau, Christian, 75011 Paris (FR); Poteau, Michel, 77230 Dammartin En Goele (FR)
(74) Mandataire: Le Moenner, Gabriel

(57) **Abrégé**

L'invention concerne une bouteille de traitement de gaz comprenant au moins un distributeur de gaz (24; 50) comportant un répartiteur (25 ; 51), destiné à être fixé dans une bouteille (10) de traitement de gaz en regard d'un orifice d'entrée ou de sortie (18 ; 56). Le répartiteur (25 ; 51) comporte une coiffe (26) recouvrant l'orifice et comportant une paroi d'extrémité (28) ajourée et une paroi latérale ajourée (30), typiquement inclinée vers ladite paroi d'extrémité (28) et entourant celle-ci. Le taux d'ajourage de la paroi latérale (30) est supérieur au taux d'ajourage de la paroi d'extrémité (28).

Application aux adsorbeurs.

## Description

La présente invention concerne une bouteille de traitement de gaz, comportant une enveloppe renfermant au moins un lit de matériau particulaire et, en regard d'au moins un orifice de passage de gaz, un répartiteur de gaz comportant une coiffe ajourée recouvrant l'orifice.

De telles bouteilles renferment par exemple des matériaux adsorbants, notamment pour la séparation de l'azote de l'air.

Dans les bouteilles à circulation axiale verticale, deux orifices d'entrée ou de sortie sont disposés respectivement dans la partie inférieure et dans la partie supérieure de la bouteille. En fonction de la période du cycle de fonctionnement de l'installation, l'orifice inférieur ou supérieur assure l'entrée du gaz dans la bouteille, alors que l'orifice opposé assure sa sortie.

Les orifices sont disposés suivant l'axe de la bouteille. Ainsi, le gaz issu de l'orifice d'entrée doit être réparti sur toute la section de la bouteille afin d'optimiser le rendement de l'installation. Le distributeur de gaz disposé dans la bouteille en sortie de l'orifice a pour but de permettre une distribution homogène du gaz sur toute cette section.

La présente invention a pour but de proposer une bouteille de traitement incorporant un distributeur de gaz, simple, robuste, de faibles coûts et assurant une bonne distribution.

A cet effet, selon un aspect de l'invention, la coiffe s'étend dans un espace inteme entre l'enveloppe et le lit, à distance de ce demier, et comporte une paroi d'extrémité ajourée à l'opposé de l'orifice et une paroi latérale ajourée, le taux d'ajourage de la paroi latérale étant supérieur au taux d'ajourage de la paroi d'extrémité.

L'invention a en outre pour objet l'utilisation d'une telle bouteille de traitement de gaz, pour la séparation de l'azote de l'air.

L'invention sera mieux comprise à la lecture de la description qui va suivre, donnée uniquement à titre d'exemple et faite en se référant aux dessins sur lesquels :
- la figure 1 est une vue en coupe longitudinale d'une bouteille d'adsorption selon l'invention ; et

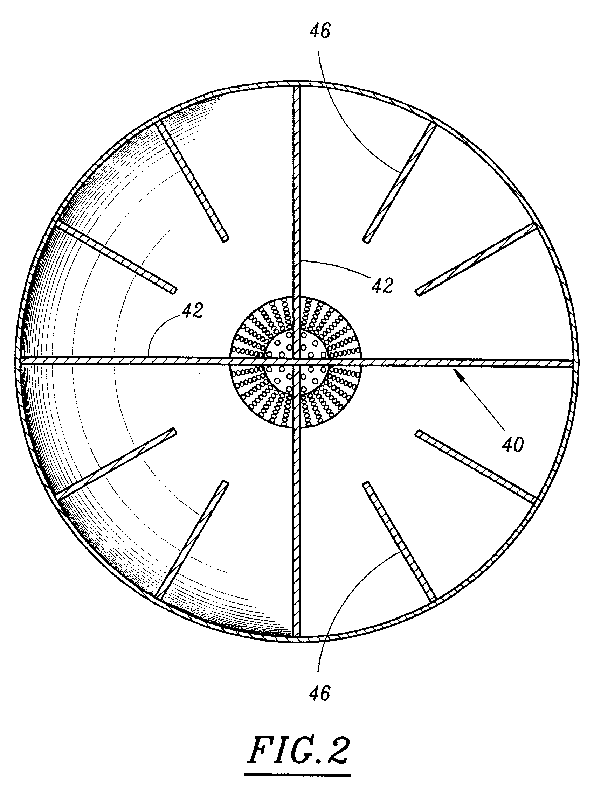

- la figure 2 est une vue de dessus en coupe transversale de la bouteille de la figure 1 prise suivant la ligne ll-ll.

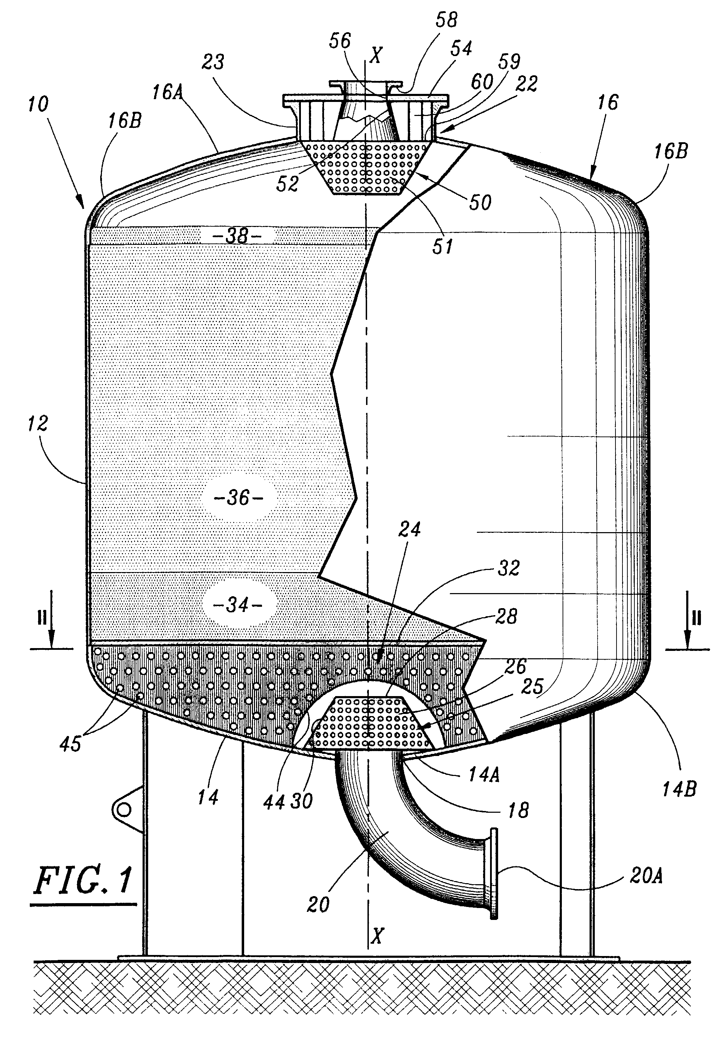

Dans le mode de réalisation représenté sur la figure 1, la bouteille d'adsorption 10 est à circulation axiale verticale. Elle est destinée au traitement de l'air et notamment à la séparation par adsorption à variation de pression (PSA) de l'azote et de l'oxygène de l'air. La bouteille comporte une paroi latérale cylindrique 12 d'axe X-X, un fond bombé 14 et une paroi supérieure, également bombée, 16. Les parties centrales du fond 14 et la paroi supérieure 16 sont en forme de calotte sphérique de grand rayon, notées respectivement 14A, 16A. Chaque calotte est prolongée à sa périphérie par une couronne toroïdale 14B, 16B ayant un rayon de courbure inférieur à celui de la calotte sphérique 14A et 16A et sur laquelle est soudée tangentiellement la paroi latérale 12.

Un orifice 18 est disposé au centre du fond 14 suivant l'axe X-X de la bouteille. Celui-ci est prolongé extérieurement par un coude 20 muni d'une bride 20A pour la fixation d'un tuyau d'alimentation en mélange gazeux à séparer (air). Le coude 20 est soudé directement sur la calotte sphérique 14A.

La paroi supérieure 16 comporte également un orifice 22 ménagé suivant l'axe X-X. Une bride 23 est soudée extérieurement sur la paroi 16 au droit de cet orifice 22. Elle délimite un trou d'homme permettant l'accès à l'intérieur de la bouteille 10.

Un distributeur de gaz 24 est fixé dans la bouteille 10 en sortie de l'orifice 18. Il comporte un répartiteur 25 formé par une coiffe 26 recouvrant ledit orifice. Dans l'exemple représenté, cette coiffe comporte d'une part une paroi de diffusion d'extrémité transversale 28 sensiblement plane et disposée orthogonalement à l'axe de l'orifice 18, et d'autre part une paroi de diffusion latérale 30 de forme tronconique convergeant vers la paroi d'extrémité 28. La paroi latérale 30 est soudée sur le fond 14 suivant sa circonférence de plus grand diamètre. La coiffe 26 s'étend dans l'espace libre entre le fond 14 et le lit d'adsorbant dans la bouteille de façon que la paroi d'extrémité soit sensiblement à mi-distance entre l'adsorbant et le fond.

Dans l'exemple représenté, la paroi d'extrémité 28 a un diamètre de 300 mm. La paroi latérale 30 est définie par un tronc de cône dont l'angle au sommet est égal à 60°. Le diamètre de ce tronc de cône est progressivement décroissant depuis l'orifice 18 vers la paroi d'extrémité 28 d'un diamètre de 500 mm au diamètre de 300 mm de la surface d'extrémité. Ainsi, la surface de la paroi d'extrémité 28 est sensiblement égale au cinquième de la paroi latérale 30. En pratique, la paroi d'extrémité est dimensionnée de telle sorte que sa surface soit comprise entre la moitié et le huitième de la surface de la paroi latérale. Les parois 28 et 30 sont ajourées. Elles sont par exemple perforées d'un ensemble de trous avantageusement régulièrement répartis.

Afin d'assurer une bonne distribution du gaz, le taux d'ajourage de la paroi latérale 30 est supérieur au taux d'ajourage de la paroi d'extrémité 28. Le taux d'ajourage encore appelé taux de vide est défini par le rapport de la surface ajourée de la paroi sur la surface totale de celle-ci.

Le taux d'ajourage de la paroi latérale est par exemple compris entre le double et le quadruple du taux d'ajourage de la paroi d'extrémité, et est notamment sensiblement égal au triple. Le taux d'ajourage de la paroi d'extrémité est sensiblement égal à 8 %, alors que le taux d'ajourage de la paroi latérale est sensiblement égal à 23 %.

Le distributeur de gaz 24 comporte typiquement une grille 32 de support de lit disposée au-dessus du répartiteur 25, à distance de celui-ci, au niveau de la liaison entre le fond 14 et la paroi latérale 12. Dans l'exemple représenté, la grille 32 supporte un premier lit 34, formé de billes d'alumine ou de céramique, complétant l'homogénéité de la diffusion du gaz vers un second lit ou lit principal 36, destiné au traitement du gaz. Le lit 36, formé de matériaux particulaires adsorbants s'étend sur l'essentiel de la hauteur de la bouteille et est recouvert par un lit supérieur 38 de billes de céramique. Ce dernier assure la cohésion du lit de matériaux adsorbants lors de la circulation du gaz, les billes de céramique ayant une densité supérieure à celle du matériau adsorbant.

La grille 32 est supportée par un ensemble de goussets rayonnants 40. Ces goussets sont centrés sur le répartiteur 25 et prennent appui sur le fond 14. Ils comportent par exemple deux plaques principales 42 disposées perpendiculairement l'une à l'autre et s'étendant suivant des diamètres de la bouteille. Ces plaques comportent deux encoches courbes 44 pour le passage du répartiteur 25. De plus, les plaques 42 sont pourvues de perçages 45 destinés à assurer l'équilibrage des pressions entre les quatre cadrans délimités par celles-ci.

Des goussets supplémentaires 46 sont disposés radialement entre le fond 14 et la grille 32. Ils sont formés par des plaques percées s'étendant parallèlement à l'axe de sortie de l'orifice 18. Ces plaques s'étendent depuis la périphérie extérieure de la bouteille jusqu'à sensiblement la moitié du rayon de celle-ci. Ainsi, elles sont interrompues avant le répartiteur 25.

L'orifice supérieur 22 est pourvu également d'un distributeur de gaz 50 comportant un répartiteur 51 à coiffe tronconique, ajouré identique au répartiteur 25 et s'étendant dans l'espace libre entre le fond supérieur 16A et le lit supérieur 38.

Le répartiteur 51 est relié, par l'intermédiaire d'un divergent 52, à un tampon 54 d'obturation du trou d'homme. Le tampon 54 est traversé par un orifice 56 muni d'une bride 58 pour la fixation d'une conduite de l'installation. Ainsi, le diamètre du divergent 52 augmente progressivement de l'orifice 56 vers distributeur 51. Une plaque annulaire 59 percée axialement assure la liaison de la sortie du divergent et de la paroi latérale du répartiteur au niveau de sa périphérie de plus grand diamètre. Par ailleurs, des jambes de liaison 60 sont prévues entre le tampon 54 et la plaque 59.

Le diamètre extérieur du répartiteur 51 est sensiblement inférieur au diamètre intérieur du trou d'homme délimité par la bride 23. Ainsi, le répartiteur 51 fixé sur le tampon 54 est mis en place en même temps que celui-ci après remplissage de la bouteille. Le lit 38 de billes de céramique s'étend au-dessous du répartiteur 51, de sorte qu'il peut être nécessaire d'interposer un ballon gonflable entre le lit supérieur et le répartiteur lors du transport de la bouteille afin d'éviter tout déplacement des lits superposés.

On comprend qu'avec de tels distributeurs, l'essentiel du gaz issu de l'orifice d'alimentation est distribué radialement. Seule une faible proportion du gaz circule sensiblement suivant l'axe de sortie. Ainsi, le gaz est distribué sur l'ensemble de la section de la bouteille, assurant ainsi une utilisation optimale du lit de matériaux adsorbants.

D'autre part, lorsque l'alimentation s'effectue par le bas (en phase de production), les goussets qui s'étendent radialement ne perturbent pas la distribution du gaz sur toute la section de la bouteille. Les perforations ménagées au travers de ces goussets assurent un équilibrage des pressions entre les différents secteurs qu'ils définissent, malgré une alimentation en gaz qui peut être légèrement dissymétrique, du fait notamment de la présence du coude 20 en entrée de la bouteille.

Lors de l'évacuation du gaz de la bouteille par l'un des orifices, le gaz est soumis à un effet d'aspiration. Dans une bouteille telle que décrite ici, cette aspiration s'effectue de manière homogène sur toute la section de la bouteille grâce au distributeur disposé en regard de l'orifice . Aussi, le distributeur décrit ici assure un écoulement homogène du gaz sur toute la section de la bouteille tant à l'entrée dans la bouteille qu'à la sortie de celle-ci.

## Revendications

1. Bouteille de traitement de gaz, comportant une enveloppe (12,14,16) renfermant au moins un lit (34,36,38) de matériau particulaire et, en regard d'au moins un orifice de passage de gaz (18;56), un répartiteur de gaz (25;51) comportant une coiffe ajourée (26) recouvrant l'orifice, caractérisée en ce que la coiffe (26) s'étend dans un espace interne entre l'enveloppe (14;16) et le lit (34,36;38), à distance de ce dernier, et comporte un paroi d'extrémité ajourée (28) à l'opposé de l'orifice (18;56) et une paroi latérale ajourée (30), le taux d'ajourage de la paroi latérale étant supérieur au taux d'ajourage de la paroi d'extrémité.

2. Bouteille selon la revendication 1, caractérisée en ce que la paroi d'extrémité (28) s'étend sensiblement orthogonalement à l'axe de sortie de l'orifice (18;56).

3. Bouteille selon la revendication 2, caractérisée en ce que la paroi latérale (30) est tronconique, notamment avec un angle au sommet sensiblement égal à 60°.

4. Bouteille selon l'une des revendications 1 à 3, caractérisée en ce que le taux d'ajourage de la paroi latérale (30) est compris entre le double et le quadruple du taux d'ajourage de la paroi d'extrémité (28) et est notamment sensiblement égal au triple.

5. Bouteille selon l'une des revendications précédentes, caractérisée en ce que le taux d'ajourage de la paroi d'extrémité (28) est sensiblement égal à 8%.

6. Bouteille selon l'une des revendications précédentes, caractérisée en ce que la surface de la paroi d'extrémité (28) est inférieure à la surface de la paroi latérale (30).

7. Bouteille selon la revendication 6, caractérisée en ce la surface de la paroi d'extrémité (28) est comprise entre la moitié et le huitième de la surface de la paroi latérale (30) et est notamment sensiblement égale au cinquième.

8. Bouteille selon l'une des revendications précédentes, caractérisée en ce qu'elle comprend une grille (32) de support du lit (36) supportée par un ensemble de goussets rayonnants (40) centrés sur le répartiteur (24).

9. Bouteille selon la revendication 8 caractérisée en ce que les goussets (40) comportent des plaques perforées (42) s'étendant sensiblement parallèlement à l'axe de sortie de l'orifice (18) et destinés à prendre appui sur le fond (14) de la bouteille.

10. Bouteille selon la revendication 8 ou 9, caractérisée en ce qu'au moins certains goussets (46) s'étendent depuis la périphérie extérieure de la bouteille, jusqu'à un point écarté du répartiteur (25).

11. Utilisation d'une bouteille selon l'une des revendications précédentes pour la séparation de l'azote de l'air.
